## Europäisches Patentamt
## European Patent Office
## Office européen des brevets

(19)

(11) Numéro de publication: **0 079 263**
**B1**

(12) **FASCICULE DE BREVET EUROPEEN**

(45) Date de publication du fascicule du brevet:
02.04.86

(51) Int. Cl.⁴: **B 29 C 59/04**

(21) Numéro de dépôt: **82401956.6**

(22) Date de dépôt: **22.10.82**

(54) Machine d'impression à cylindres presseurs.

(30) Priorité: **05.11.81 FR 8120899**

(43) Date de publication de la demande:
**18.05.83 Bulletin 83/20**

(45) Mention de la délivrance du brevet:
**02.04.86 Bulletin 86/14**

(84) Etats contractants désignés:
**BE DE GB IT SE**

(56) Documents cités:
**DE - A - 1 479 884**
**GB - A - 2 032 834**
**US - A - 2 585 915**
**US - A - 4 054 701**

(73) Titulaire: **PRODUCTIONS TEXTILES ET PLASTIQUES DE LA MARNE S.A., Rue du Vivier, F-51160 Ay (FR)**

(72) Inventeur: **Laval, Michel Jean André, Les Ardannes, F-51500 Rilly-La-Montagne (FR)**

(74) Mandataire: **Gérardin, Robert Jean René, Cabinet Robert Gérardin 2, rue Gambetta, F-51200 Epernay (FR)**

EP 0 079 263 B1

## Description

L'invention concerne une machine à cylindres presseurs permettant la réalisation en continu de motifs, en creux ou en relief, sur des bandes de matière doublées d'une mousse synthétique.

L'obtention de motifs imprimés, en relief ou en creux, sur des bandes en matière souple doublées de mousse synthétique, était possible, jusqu'à présent, en continu, en utilisant le procédé dit de «côtelage» qui consiste à creuser, au moyen de résistances chauffantes, des sillons dans la mousse et à y incorporer le tissu. Ce procédé permet d'obtenir des côtes plus ou moins rapprochées, dont la section peut varier suivant la forme de l'élément chauffant, mais il ne permet que d'obtenir des motifs linéaires disposés dans le sens du déroulement de la bande. Des motifs discontinus: losanges, rectangles, ronds, etc. . . , peuvent être obtenus sur un complexe d'épaisseur comprise entre 2 et 30 mm, formé de la justaposition de tissu, de mousse synthétique et d'une doublure, en utilisant la soudure à haute fréquence ou thermique en discontinu.

On connaît déjà une machine d'impression correspondant au préambule de la revendication 1 (Brevet US-A-4 054 701). Son cylindre presseur présente, sur toute sa périphérie, des motifs en creux ou en relief de même forme, régulièrement répartis; ce cylindre presseur est monté à l'extrémité d'un étrier mobile soumis à la force d'un vérin qui permet ainsi de régler la pression exercée par le cylindre en fonction de la forme et de la densité des motifs à obtenir. Avec une telle machine il n'est possible d'obtenir que des motifs régulièrement répartis et non des motifs quelconques, car la pression et, par conséquent, la profondeur de l'empreinte, sont inversement proportionnelles à la longueur de la partie de motif située sur une même génératrice du rouleau presseur; il s'ensuit des variations de relief du motif qui vont à l'encontre de l'effet esthétique recherché et qui compromettent l'adhérence de l'ensemble.

La présente invention a pour but de remédier à ces inconvénients. L'invention, telle qu'elle est caractérisée dans la revendication, résout le problème constituant à créer une machine d'impression à cylindres presseurs permettant la réalisation de motifs décoratifs complexes de forme, de disposition et d'orientation quelconque, car, avec celle-ci, en effet, la pression est maintenue à une valeur déterminée quelles que soient la longueur et la forme de l'empreinte.

Les cylindres presseurs dont elle est équipée sont soumis à une force de rapprochement proportionnelle à la longueur et à la forme du relief à obtenir. La vitesse de rotation des cylindres presseurs varie en fonction de la longueur et du relief à obtenir. La déformation de la mousse et l'adhérence du tissu sur celle-ci sont obtenus par un élément chauffant disposé en amont des cylindres presseurs, à une distance variable en fonction de la vitesse de défilement de bandes. L'intensité du chauffage varie en fonction de la vitesse de défilement des bandes. Les bandes constituant le complexe sont amenée à vitesse variable. La force de rapprochement des cylindres presseurs et leur vitesse de rotation, la vitesse d'amenage des bandes et l'éloignement et l'intensité de la source de chaleur, varient automatiquement selon un processus préalablement établi en fonction du motif à réaliser.

Les avantages obtenus par cette invention consistent essentiellement en ce qu'elle permet la réalisation, en continu, de n'importe quels motifs décoratifs, quelle que soit leur complexité, sur des bandes de matière doublée d'une mousse synthétique.

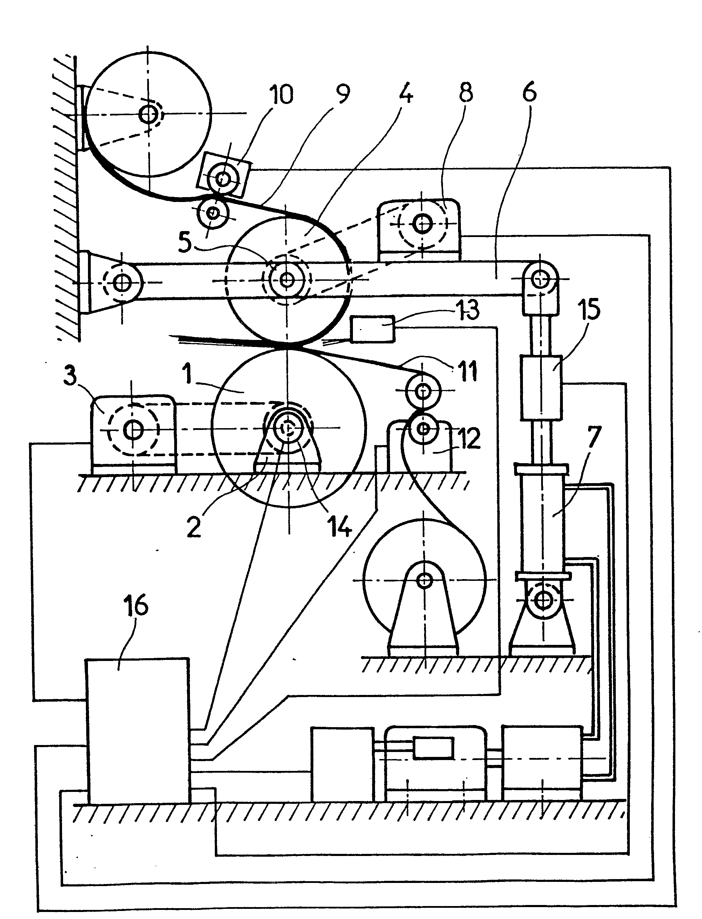

L'invention est exposée ci-après plus en détail à l'aide du dessin représentant seulement un mode de réalisation de la machine.

La figure unique de ce dessin représente une vue de côté de la machine réalisée conformément à l'invention.

En se reportant au dessin, on remarque que cette machine est composée d'un cylindre matriceur 1 monté sur des paliers fixes 2, entraîné par un moteur 3, sur lequel s'appuie un cylindre presseur 4, monté sur des paliers flottants 5 fixés sur des bras articulés 6 actionnés par des vérins 7, entraîné en rotation par un moteur 8. La bande de mousse synthétique 9 est amenée vers les cylindres par un dispositif 10 entraîné à vitesse variable. La bande de tissu 11 est amenée vers les cylindres 1 et 4 par un dispositif 12, entraîné à vitesse variable. L'élément chauffant 13 est disposé en amont des cylindres 1 et 4, à une distance variable. Un capteur rotatif 14 est monté en bout de l'arbre du cylindre matriceur 1. Un capteur linéaire 15 est interposé entre la tige du vérin 7 et l'extrémité libre du bras articulé 6. Les moteurs d'entraînement des cylindres, des dispositifs d'amenage et de l'élément chauffant, l'élément chauffant lui-même, le boîtier de commande de la centrale hydraulique qui alimente les vérins et les capteurs, sont reliés à une armoire de commande de processus 16.

Comme on le voit, la force de rapprochement du cylindre presseur contre le cylindre matriceur est modulée par les vérins 7, par l'intermédiaire des bras articulés 6, en fonction de la rotation du cylindre matriceur 1, par l'intermédiaire du capteur rotatif 14 et de la commande de processus 16.

L'intensité de la source de chaleur de l'élément chauffant 13, ainsi que sa distance par rapport aux rouleaux 1 et 4, sont modulés en fonction de la rotation du cylindre matriceur 1 par l'intermédiaire du capteur rotatif 14 et de la commande de processus 16.

La vitesse de rotation des cylindres presseurs ainsi que les vitesses d'amenage respectives du tissu et de la mousse synthétique, varient en fonction de la rotation du cylindre matriceur par l'intermédiaire du capteur rotatif 14 et de la commande de processus 16.

Ainsi, il est possible d'obtenir, à chaque instant, une pression et une plasticité de la mousse, adaptées avec précision à la longueur et au relief de la partie de motif située sur la génératrice de contact des rouleaux, afin d'obtenir la constance du relief sur l'ensemble du motif.

La machine, selon l'invention, peut être utilisée dans tous les cas où un relief quelconque doit être obtenu, en creux ou en relief, sur un complexe réalisé par superposition de bande de matière souple et de mousse synthétique. Elle peut être utilisée, en particulier, dans la domaine du gainage ou du garnissage.

Des applications particulièrement intéressantes existent en garnissage des sièges et des portières des véhicules automobiles.

## Revendication

Machine à cylindre presseurs destinés à la réalisation en continu de motifs imprimés, en creux ou en relief, sur des bandes (11) en matière souple doublées de mousse synthétiques (9), caractérisée en ce que les cylindres presseurs (1 et 4) sont soumis à une force de rapprochement proportionnelle à la longueur et à la forme du relief à obtenir, en ce que la vitesse de rotation des cylindres presseurs (1 et 4) varie en fonction de la longueur et du relief à obtenir, en ce que la déformation de la mousse (9) et l'adhérence du tissu (11) sur celle-ci sont obtenus par un élément chauffant (13) disposé en amont des cylindres presseurs, à une distance variable en fonction de la vitesse de défilement des bandes (9, 11), en ce que l'intensité du chauffage varie en fonction de la vitesse de défilement des bandes, en ce que les bandes (9, 11) constituant le complexe sont amenées à vitesse variable et en ce que la force de rapprochement des cylindres presseurs et leur vitesse de rotation, la vitesse d'amenage des bandes et l'éloignement et l'intensité de la source de chaleur, varient automatiquement (14, 15, 16) selon un processus préalablement établi en fonction du motif à réaliser.

## Patentanspruch

Maschine mit Druckwalzen, zum durchlaufenden Tief- und Reliefdruck von Motiven auf schaumkunststoffkaschierten (9) Streifen (11) aus geschmeidigem Stoff. Die Eigentümlichkeit des Geräts besteht darin, – dass die Druckwalzen (1 und 4) einer Gegenüberstellungskraft unterworfen sind, die der Länge und der Form des gezielten Reliefs proportional entspricht, – dass die Drehgeschwindigkeit der Druckwalzen (1 und 4) je nach der Länge und des gezielten Reliefs veränderlich ist, – dass die Verformung des Schaumstoffs (9) und das Haftvermögen des Stoffs (11) auf dem Schaumstoff mittels eines Heizelements (13) erwirkt werden, welches oberhalb der Druckwalzen gelegen ist und dessen Abstand je nach der Durchlaufgeschwindigkeit der Streifen (9, 11) abänderlich ist, – dass die Heizintensität je nach Durchlaufgeschwindigkeit der Streifen abänderlich ist, – dass die den Komplex bildenden Streifen (9, 11) in einer veränderlichen Geschwindigkeit zugeführt werden, – und dass sich die Gegenüberstellungskraft der Druckwalzen und deren Drehgeschwindigkeit, die Zuführungsgeschwindigkeit der Streifen, der Abstand und die Intensität der Heizquelle automatisch (14, 15, 16) nach einem zuvor geplanten, vom Motiv abhängigen Vorgang verändern.

## Claim

Machine incorporating presser cylinders for continuously making printed pattern or designs, in intaglio or in relief, on webs (11) of supple material lined with synthetic foam (9), characterised in that the presser cylinders (1, 4) are subjected to a force of appoach proportional to the length and shape of the relief to be obtained; the speed of rotation of the presser cylinders (1 and 4) varies as a function of the length and relief to be obtained; the deformation of the foam (9) and the adherence of the fabric (11) thereon are obtained by a heating element (13) disposed upstream of the presser cylinders (1, 4) at a distance varying as a function of the speed of advance of the webs (9, 11); the intensity of the heating varies as a function of the speed of advance of the webs (9, 11); the webs (9, 11) constituting the complex are conducted at variable speed, and the force of appoach of the presser cylinders (1, 4) the speed of rotation thereof, the speed of supply of the webs (9, 11) and the distance and intensity of the source of heat, vary automatically (14, 15, 16) in accordance with a process previously set up as a function of the pattern to be made.

$$- \frac{I}{1} -$$